(19) Europäisches Patentamt
European Patent Office
Office européen des brevets

(11) **EP 1 071 178 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.$^7$: **H01S 3/098**, H01S 3/081, H01S 3/06, H01S 3/0941

(21) Anmeldenummer: **00113567.2**

(22) Anmeldetag: **27.06.2000**

(54) **Modensynchronisierter Festkörperlaser**

Mode synchronised solid state laser

Laser à l'état solide à modes synchrones

(84) Benannte Vertragsstaaten:
**DE FR GB**

(30) Priorität: **23.07.1999 DE 19934638**

(43) Veröffentlichungstag der Anmeldung:
**24.01.2001 Patentblatt 2001/04**

(73) Patentinhaber: **Jenoptik LDT GmbH**
**07548 Gera (DE)**

(72) Erfinder:
• **Kränert, Jürgen**
**07749 Jena (DE)**
• **Springer, Thoralf**
**07749 Jena (DE)**

(74) Vertreter: **Geyer, Werner, Dr.-Ing. et al**
**Patentanwälte**
**Geyer, Fehners & Partner**
**Perhamerstrasse 31**
**80687 München (DE)**

(56) Entgegenhaltungen:
**WO-A-98/02945**          **US-A- 5 561 547**

• **GRAF T ET AL: "Multi-Watt Nd:YVO4 laser, mode locked by a semiconductor saturable absorber mirror and side-pumped by a diode-laser bar" OPTICS COMMUNICATIONS, NORTH-HOLLAND PUBLISHING CO. AMSTERDAM, NL, Bd. 159, Nr. 1-3, 1999, Seiten 84-87, XP004152377 ISSN: 0030-4018**
• **KURTEV S Z ET AL: "EFFECTS OF THERMALLY INDUCED BIREFRINGENCE IN HIGH-OUTPUT POWER ELECTRO-OPTICALLY Q-SWITCHED ND:YAG LASERS AND THEIR COMPENSATION" APPLIED OPTICS, OPTICAL SOCIETY OF AMERICA,WASHINGTON, US, Bd. 32, Nr. 3, 20. Januar 1993 (1993-01-20), Seiten 278-285, XP000334484 ISSN: 0003-6935**

## Beschreibung

Die Erfindung betrifft einen modensynchronisierten Festkörperlaser, bestehend aus einem Lasermedium innerhalb eines durch einen Resonatorspiegel und einen Auskoppelspiegel gebildeten Laserresonators, der durch mindestens einen konkaven Faltungsspiegel gefaltet ist, mit einem Sättigbaren Absorber innerhalb des Laserresonators und mit mindestens einer Laserpumpquelle, deren Pumpstrahlung das Lasermedium pumpt, wobei die gestreckte Resonatorlänge L eine Funktion der Puls-Wiederholfrequenz ist und diese durch einen Abstand zwischen dem Resonatorspiegel und dem Auskoppelspiegel bestimmt ist.

Modensynchronisierte Festköperlaser erfordern im Allgemeinen lange Resonatoren. Die Resonatorlänge L bestimmt die Folgefrequenz $\nu$ nach der bekannten Formel:

$$\nu = \frac{c}{2 \cdot n \cdot L}$$

wobei c die Lichtgeschwindigkeit und n die Brechzahl ist. Typische Frequenzen sind 50 MHz bis 300 MHz, woraus sich Resonatorlängen von etwa ca. 3 m bis 0,5 m ergeben. Um die Baulänge zu reduzieren und ausreichende Stabilität zu erreichen, werden diese Resonatoren meist gefaltet. Bei der Faltung entsteht bei schrägem Lichteinfall auf sphärische Flächen Astigmatismus, der die Qualität des Laserstrahles deutlich verschlechtert.

Weiterhin wird die Qualität des Laserstrahls durch die sogenannte thermische Linse verschlechtert. Der Effekt der thermischen Linse und die klassische Kompensation in Laserresonatoren wird in *W. Koechner: "Solid-State Laser Engineering", Springer, 1996* beschrieben. Die Kompensation der thermischen Linse erfordert die Einbeziehung sphärischer Optik oder eine entsprechende Dimensionierung des aktiven Mediums.

Für das Modelocken wird ein Strahl mit TEM$_{00}$ und M$^2 \sim$ 1 benötigt. Typische Resonatoren für modensynchronisierte Laser sind in *Keller U.: "Ultrafast All-Solid-State Laser Technology", Appl. Physics B, 58, 347-363 (1994) oder in Keller U., T.Heng Chiu: "Resonant Passive Mode-Locked Nd:YLF Laser", IEEE J. of QE vol. 28, 1710-1720 (1992)* beschrieben. Für die dort beschriebenen Resonatoren ist typisch, daß sich der passive Sättigbare Absorber in einem resonatorinternen Fokus mit hoher Intensität befindet. Dies wird durch kurzbrennweitige Fokussierspiegel oder durch strahlbündelnde Linsen erreicht. Der aktive Spot wird klein gehalten ($\varnothing$ 50 - 200 $\mu$m). Dieses ist erforderlich, um zu immer noch kürzeren Pulsbreiten zu gelangen, die im Femtosekundenbereich liegen.

Praktisch hat sich auch gezeigt, daß die Homogenität handelsüblicher Sättigbarer Absorber gering ist und somit immer nur ein relativ kleiner Teil der Fläche eines sättigbaren Absorber-Bauelementes seine Funktion in einer optimalen Weise erfüllt. Somit ist daher auch ein kleiner Fokus (unter 200 $\mu$m) auf dem Sättigbaren Absorber vorteilhaft, was allerdings die Ausgangsleistung des Lasers begrenzt.

Bedingt durch den Astigmatismus des gefalteten Resonators und den Einfluß der thermische Linse im Lasermedium ist nur ein kleiner Strahlquerschnitt möglich (z.B. 50 $\mu$m), um ein annähernd homogenes Strahlenbündel im Laserresonator zu erreichen. Damit war bisher die passive Modensynchronisation mit einem Sättigbaren Absorber auf Halbleiterbasis auf relativ kleine Durchschnittsleistungen (< 1 W) beschränkt. Die Laserzerstörungsschwelle für derartige Halbleitermaterialien liegt typisch im Bereich von 1 MW/cm$^2$ bis 10 MW/cm$^2$ (cw). Bedingt durch die sättigbare Absorption und einen verbleibenden Anteil Restabsorption reduziert sich dieser Wert noch wesentlich und muß beim Design des Resonators berücksichtigt werden. Daher gibt es verschiedene Vorschläge die Leistungsdichte und/oder die Leistungsverteilung im sättigbaren Absorber zu vermindern.

In der Veröffentlichung DE 196 80 508 *(Nighan)* werden diodengepumpte Festkörperlaser für höhere Durchschnittsleistungen vorgestellt, bei denen die Strahlführung in dem Laserresonator so eingestellt ist, daß das Strahlenbündel von den Resonatorspiegeln in das Lasermedium weder konfokal noch konzentrisch ist (Seite 5 Zeile 20 ff: "zwischen konfokal und konzentrisch" oder "konfokal-biskonzentrisch" oder "nahezu konfokal" (Seite 12, Zeile 25). Hier entsteht eine Strahldeformation sowohl durch die Faltung im konfokalen Resonator als auch durch den Einfluß der Thermischen Linse. Diese Anordnung ist für ein passives Modelocken nicht geeignet, da die Geometrie des Resonators im wesentlichen durch die thermische Linse bestimmt wird.

In der Veröffentlichung *US 5,812,308 (Kafka)* wird ein modensynchronisierter Laser mit Verstärker vorgestellt. Die Besonderheit für dieses System besteht darin, daß der Laserkristall unmittelbar vor dem Faltspiegel steht und durch diesen gepumpt wird. Die optische Achse des Resonators durchläuft den Kristall zweimal in der durch die Pumpoptik angeregten Zone. Der Winkel zwischen den beiden Teilen der optischen Achse ist bedingt durch die begrenzten Abmessungen des Lasermediums relativ klein. Mit diesen kleinen Winkeln wird jedoch der Astigmatismus vergleichsweise gering gehalten, es entstehen aber starke Einschränkungen für die Gestaltung Resonatorgeometrie. Die Durchschnittsleistung ist durch die Pumpgeometrie beschränkt. Als Modelocker wird ein passiver Sättigbarer Absorber auf Halbleiterbasis mit Quantum Weil angegeben, der gleichzeitig als ein Resonatorspiegel dient. Nachteilig ist, daß diese Anordnung wegen der Laserkristallgeometrie nur relativ kleine Faltungswinkel erlaubt.

Eine ähnliche Anordnung aber mit mehreren Kristallen wird in der Veröffentlichung US 5,237,584 *(Shannon)* beschrieben. Auch hier ist die Strahlqualität bedingt durch die Vielzahl der Faltungen über die Laserkristalle und die Vielzahl der resonatorinternen Flächen weit von einem resonatorinternen Strahlenbündel mit $TEM_{00}$ und $M^2 \sim 1$ entfernt und daher für die Modensynchronisation mit hoher Leistung nicht geeignet.

In der Veröffentlichung *WO 98/02945 (Nighan)* wird ein Nd-Vanadat-Laser mit Güteschaltung beschrieben. Für diese Lösung wird ein einfach gefalteter Resonator genutzt. Die Faltung erfolgt über einen Planspiegel und das Pumplicht wird entlang der optischen Achse des Resonators eingestrahlt. Um den Astigmatismus klein zu halten, ist der Faltungsspiegel plan ausgeführt. Für die Modensynchronisation ist diese Anordnung nicht geeignet, da sich in diesem sehr kurzen Resonator (18 cm) keine Möglichkeiten für die Anordnung des Modelockers und der entsprechenden Einstellung der Impulsenergie zur Sättigung des passsiven Absorbers ergeben.

In der Veröffentlichung *WO 95/21479 (Keirstaed)* wird vorrangig für den $Nd{:}YVO_4$ - Kristall gezeigt, wie die Elliptizität der thermischen Linse reduziert werden kann. Diese geschieht durch gezielte Dimensionierung der Wärmesenke und Nutzung der Anisotropie dieses Kristalles. Nachteilig ist dabei, daß die Wärme des nicht in Laserstrahlung umgesetzten Pumplichts nur über zwei Flächen am Kristall bevorzugt abgeführt wird. Damit reduziert sich die effektive Kühlung des Laserkristalls, was besonders bei hohen Laserleistungen zu Effektivitätsverlusten führt. Die radiale Symmetrie der thermischen Linse ist geeignet für lineare Resonatoren, in denen kein Astigmatismus vorliegt. Es wurde aber festgestellt, daß die Pumplichtverteilung einen deutlich größeren Einfluß auf die Strahlqualität hat als die Wärmesenke.

Die Erfindung hat das Ziel einen modensynchronisierten Festkörperlaser zu schaffen, dessen Laserresonator besonders einfach aufgebaut ist und der mit weniger Mitteln oder einfacheren Maßnahmen mit möglichst guter Näherung die Strahlparameter $TEM_{00}$ und $M^2 =1$ erreicht und dessen gepulste Ausgansstrahlung möglichst nahe zu 100% stabil ist. Die Erfindung hat weiterhin das Ziel, einen modensynchronisierten Festkörperlaser zu schaffen, dessen Laserresonator insbesondere mit einer Pulsfolgefrequenz zwischen 50 MHz und 300 MHz und insbesondere mit einer Impulsdauer zwischen 0,1 und 100 Pikosekunden mit hoher Amplitudenstabilität, insbesondere mit einer Ausgangsleistung größer 1 Watt und mit einem nahezu beugungsbegrenzten Laserstrahl zu schaffen.

Die Erfindung betrifft einen modensynchronisierten Festkörperlaser mit einem Lasermedium innerhalb eines durch einen Resonatorspiegel und einen Auskoppelspiegel gebildeten Laserresonators, der durch mindestens einen konkaven Faltungsspiegel gefaltet ist, mit einem sättigbaren Absorber (im folgenden auch Sättigbarer Absorber genannt) innerhalb des Laserresonators und mit mindestens einer Laserpumpquelle, deren Pumpstrahlung das Lasermedium pumpt, wobei die gestreckte Resonatorlänge L eine Funktion der Puls-Wiederholfrequenz ist und diese durch einen Abstand zwischen dem Resonatorspiegel und dem Auskoppelspiegel bestimmt ist.

Die Erfindung ist dadurch gekennzeichnet, daß ein elliptisches Strahlprofil innerhalb des Laserresonators, welches durch eine Schrägstellung einer optischen Achse des mindestens einen konkaven Faltungsspiegels zu einer gefalteten optischen Achse des Laserresonators bedingt ist, mit einer elliptischen thermischen Linse (im folgenden auch Thermische Linse genannt) im Lasermedium beseitigt wird, deren optische Wirkung eine Elliptizität des Strahlprofiles erzeugt, das um 90° zu dem durch den Faltungsspiegel erzeugten elliptischen Strahlprofil versetzt ist, wobei der Grad der Elliptizität der Thermischen Linse durch die Materialeigenschaften, die kristallographische Orientierung und die geometrische Abmessungen des Lasermediums und durch eine Wahl der Intensität und Intensitätsverteilung der Pumpstrahlung im Lasermedium so eingestellt wird, daß eine möglichst gleichmäßige Energiedichteverteilung über dem bestrahlten Gebiet des Sättigbaren Absorbers entsteht.

Eine derartige Kompensation des Astigmatismus des Faltungsspiegels durch den Asigmatismus der Thermischen Linse wird besonders einfach erreicht, wenn die nachfolgenden geometrischen Randbedingungen eingehalten werden.

Der Krümmungsradius R des Faltungsspiegels liegt zweckmäßigerweise im Bereich des 0,5-fachen bis 2-fachen der mittleren Brennweite f der Thermischen Linse, um ihren Einfluß auf den Strahlengang im Resonator, unabhängig von der absoluten Größe der Brennweite f, gering zu halten. Insbesondere wird der Krümmungsradius R des Faltungsspiegels etwa gleich dem Wert der mittleren Brennweite f der Thermischen Linse gewählt.

Bei dieser Dimensionierung ist der Einfluß der Thermischen Linse auf den Strahlengang im Resonator am geringsten, da sich die strahldeformierenden Wirkungen des Faltungsspiegels und der Thermischen Linse kompensieren. Weiterhin ist es vorteilhaft, wenn der konkave Faltungsspiegel einen Krümmungsradius R hat, der im Bereich zwischen U2 und 2*L liegt, insbesondere der Krümmungsradius R näherungsweise gleich der Laserresonatorlänge L ist. Dabei ist dieser Faltungsspiegel innerhalb der gestreckten Resonatorlänge L angeordnet und bildet einen ersten Resonatorast mit der Länge $I_1$ und einen zweiten Resonatorast mit der Länge $L_2$ und in diesem ist das Lasermedium mit der Thermischen Linse angeordnet.

Beispielsweise beträgt bei einer Pulsfolgefrequenz von 160 MHz die Resonatorlänge L etwa 93 cm, der Radius R des Faltungsspiegels etwa 75 cm. Die mittlere Brennweite f der Thermischen Linse sollte größer 60 cm, zum Beispiel etwa 80 cm sein.

Für die Kompensation der Strahldeformation (Astigmatismus) ist es weiterhin vorteilhaft, wenn die Längen in bestimmten Größenordnungen zueinander abgestimmt

sind: Es gilt $I_1 + I_2 = L$, wobei $I_2 > I_1$ ist. Insbesondere ist $I_2$ zweimal bis dreimal so groß ist wie $I_1$.

Auf der Oberfläche des Sättigbaren Absorbers muß eine Energiedichte eingestellt werden, die diesen innerhalb seiner Ladungsträger-Lebensdauer einmalig in den gesättigten Zustand bringt, d.h. daß ein Einzelimpuls erzeugt wird. Dies wird dadurch erreicht, daß bei einem vorgegebenen Radius R des Faltungsspiegels und einer vorgegebenen Resonatorlänge L der Abstand zwischen dem Faltungsspiegel und dem Resonatorspiegel mittels einer Längenänderung so einstellbar ist, daß damit die Größe des bestrahlten Gebietes (Spot) auf dem Sättigbaren Absorber in Abhängigkeit von der auf diesen einfallenden Strahlungsleistung so einstellbar ist, daß eine Energiedichte erreicht wird, um den Sättigbaren Absorber innerhalb seiner Ladungsträger-Lebensdauer einmalig zu sättigen, wobei die gestreckte Resonatorlänge L durch eine weitere Längenänderung zwischen dem Faltungsspiegel und dem Auskoppelspiegel beibehalten wird.

Vorteilhafterweise ist das bestrahlte Gebiet auf dem Sättigbaren Absorber größer 200 μm im Durchmesser. Damit ist sichergestellt, daß die Energiedichte auch bei hohen Laserausgangsleistungen sicher unterhalb einer Zerstörschwelle des Sättigbaren Absorbers liegt.

Eine vorteilhafte Ausgestaltung der Erfindung wird erreicht, wenn der Faltungsspiegel einen Faltungswinkel β der optischen Achse des Resonators zwischen 5° und 45° in einer Faltungsebene (y-z-Ebene) einstellt. Damit wird ein räumlich kompakter Aufbau des Laserresonators erreicht.

Der Sättigbare Absorber ist in einem Abstand $I_4$ zum Resonatorspiegel angeordnet, der kleiner $I_1/10$ ist. Auf den Resonatorspiegel trifft dann ein nahezu gleiches Strahlprofil der Laserstahlung auf, wie auf den Sättigbaren Absorber. Durch die getrennte Anordnung können beide Bauteile unabhängig voneinander hergestellt und im Laserresonator eingestellt werden.

Besonders vorteilhaft ist es, wenn der Sättigbare Absorber auf dem Resonatorspiegel aufgebracht ist. Dies ist jedoch nur möglich, wenn die entsprechenden Fertigungstechnologien für einen derartigen Resonatorspiegel sicher beherrscht werden und eine derartige Baugruppe hinreichend gute gepulste Laserstrahlung hoher Leistung liefert. Dies wird dadurch erreicht, daß Sättigbare Absorber aus einer Einfach-Quanten-Schicht (Singel-Quantum-Well) besteht, die auf dem Resonatorspiegel aufgebracht ist.

Weiterhin ist es für die sättigbar absorbierende Wirkung des Sättigbaren Absorbers vorteilhaft, die mindestens eine an das freie Volumen (Luft) angrenzende optische Fläche des Sättigbaren Absorbers mit einer Anti-Reflex-Beschichtung zu versehen.

Die Laserpumpquelle besteht aus einer oder aus mehreren Laserdioden, die über eine Koppeloptik mit dem Lasermedium optisch verbunden ist/sind. Die Pumpoptik kann auch mit einer astigmatischen Optik ausgestattet werden, um die Form der Thermische Linse entsprechend zu beeinflussen.

Eine vorteilhafte Ausgestaltung für den Geräteaufbau besteht darin, daß zwischen der oder den Laserdiode(n) und jeder Koppeloptik eine Lichtleitfaserverbindung vorgesehen ist.

Der Resonatorspiegel ist ein Metallspiegel oder ein dielektrischer Spiegel insbesondere ein Bragg-Reflektor.

Die Flächennormale jeder der Endflächen des Lasermediums steht zweckmäßigerweise unter einem kleinen Winkel zwischen 0° und 5° zur optischen Achse des Laserresonators, um störende Reflexionen zu vermeiden.

Ein besonders kompakter Aufbau des Laserresonators wird dadurch erreicht, daß dieser durch einen oder zwei Einkoppelspiegel zusätzlich einmalig oder zweimalig gefaltet ist und die eine oder zwei Laserpumpquelle(n) mit ihrer(en) Pumpstrahlung(en) über den(die) Einkoppelspiegel das Lasermedium endseitig pumpt(en). Die Faltung erfolgt in einem Winkel γ, der insbesondere gleich β ist. Mit jeweils einer Pumpquelle an jeweils einem Ende des Lasermediums ist die Ausbildung der Form der Thermischen Linse sehr gut einstellbar. Die Pumplichtverteilung im Lasermedium ist in z-Richtung wesentlich homogener. Die Thermische Linse ist nicht streng ausgebildet, ihre Brennweite kann vergleichsweise größer eingestellt werden, was wiederum eine wesentlich höhere Laserausgangsleistung ermöglicht.

Dabei liegt der Sättigbare Absorber außerhalb des von der Endfläche des Lasermediums und dem Einkoppelspiegel begrenzten Strahlenganges, d.h. der Einkoppelpiegel ist kleiner $I_3/2$ von der Endfläche des Lasermediums entfernt.

Eine andere Möglichkeit besteht darin, daß das Lasermedium von der Seite gepumpt wird, wobei durch eine verteilte Anordnung der Strahlung mehrerer Laserpumpquellen über die Umfangsflächen des Lasermediums die elliptische Thermische Linse und die Inversionsverteilung einstellbar sind.

Zur Feineinstellung der Intensitätsverteilung auf dem Sättigbaren Absorber ist weiterhin eine Schrägstellung einer optischen Achse der Pumpstrahlung(en) zu einer optischen Achse des Laserresonators, abweichend zu einer 0°-Stellung (endgepumpt) oder 90°-Stellung (seitengepumpt) mit einem Winkel α zwischen größer 0° bis kleiner 5° innerhalb der y-z-Ebene und/oder der x-z-Ebene vorgesehen, wobei mit dieser Schrägstellung insbesondere die Elliptizität der Thermischen Linse feineinstellbar ist. Infolge dieser Feineinstellung gelingt es, den Spot auf dem Sättigbaren Absorber so zu beeinflussen, daß eine saubere Modensynchronisation erfolgt. Mit der Schrägstellung der optischen Achsen des Pumplichtes wird die Inversionsverteilung im Laserkristall einstellbar, so daß ein angepaßter homogener aktiver Spot auf dem passiven Modelocker entsteht, der Ausgangsleistungen > 4 W erlaubt.

Für die Erhöhung der Durchschnittsleistungen modensynchronisierter diodengepumpter Festkörperlaser, die mit passiver Modensynchronisation arbeiten, sind also größere homogen aktive Strahldurchmesser auf dem Modelocker erforderlich und können durch die Merkmale der Erfindung realisiert werden. Um dieses zu erreichen, muß der Laserresonator wie oben beschrieben angepaßt und optimiert werden, indem die Strahlinhomogenitäten infolge der Faltung des Strahlenganges, der Wirkung der thermischen Linse und der Inversionsverteilung im Lasermedium infolge der Pumplichtverteilung vorteilhaft ausgenutzt werden, um eine gepulste Laserstrahlung mit hoher Leistung und konstanten Strahlparametern zu erzeugen. Der Sättigbare Absorber selbst muß jedoch ebenfalls ausreichend homogen sein.

Eine Modenblende im Strahlengang, die zwischen einer Endfläche des Lasermediums und dem Sättigbaren Absorber angeordnet ist, erzeugt die gewünschte Modenverteilung, insbesondere eine $TEM_{00}$-Mode der Laserstrahlung.

Unter Berücksichtigung der genannten Bedingungen ist nun ein Aufbau vorteilhaft, bei dem in dem ersten Resonatorast nur der Auskoppelspiegel steht und in dem zweiten Resonatorast ausgehend von dem Faltungsspiegel das Lasermedium mit der Thermischen Linse, der Sättigbare Absorber und der Resonatorspiegel aufeinanderfolgend angeordnet sind. Hier ist ein Abstand $I_3$ vom Lasermedium bis zum Resonatorspiegel kleiner als $I_1$, insbesondere ist $I_3$ ½ bis 1/3 so groß wie $I_1$. Durch die Abstandsänderung $\Delta I_2$ wird die Spotgröße auf dem Sättigbaren Absorber eingestellt. Ebenso wird der Auskoppelspiegel um den Betrag $\Delta I_1$ nachgeführt, um die Resonatorlänge L zu einzuhalten. Alternativ kann auch der Faltungsspiegel um $\Delta I$ verschoben werden und der Auskoppelspiegel oder der Resonatorspiegel werden nachgeführt.

In einer anderen Variante sind in dem ersten Resonatorast ausgehend von dem Faltungsspiegel der Sättigbare Absorber und der Resonatorspiegel aufeinanderfolgend angeordnet und in dem zweiten Resonatorast sind ausgehend von dem Faltungsspiegel das Lasermedium mit der Thermischen Linse und der Auskoppelspiegel angeordnet. Auch hier läßt sich die Größe des Spottes auf dem Sättigbaren Absorber durch Verschieben der Spiegel einstellen, wobei hier durch die vertauschten Längenverhältnisse andere Abbildungsverhältnisse herrschen.

Ausdrücklich wird darauf hingewiesen, daß die beschriebene Resonatorgeometrie beispielhaft ist. Die Prinzipien der Erfindung sind insbesondere auch bei Laseresonatoren anwendbar, die in einem Laserresonator mehrere sphärische Faltungsspiegel und/oder mehrere Lasermedien enthalten und/oder die andere Abstandsverhältnisse der einzelnen Bauelemente zueinander aufweisen.

Die Erfindung wird nachfolgend an Hand von Figuren beschrieben. Es zeigen

Fig. 1: Modensynchronisierter Festkörperlaser, der von den Seitenflächen her gepumpt ist

Fig. 2: Modensynchronisierter Festkörperlaser, der von den zwei Seiten endgepumpt ist

Fig. 3: Einseitig endgepumptes Lasermedium

Fig. 4: Eine andere Ausführung des modensynchronisierten Festkörperlases, der von den zwei Seiten endgepumpt ist.

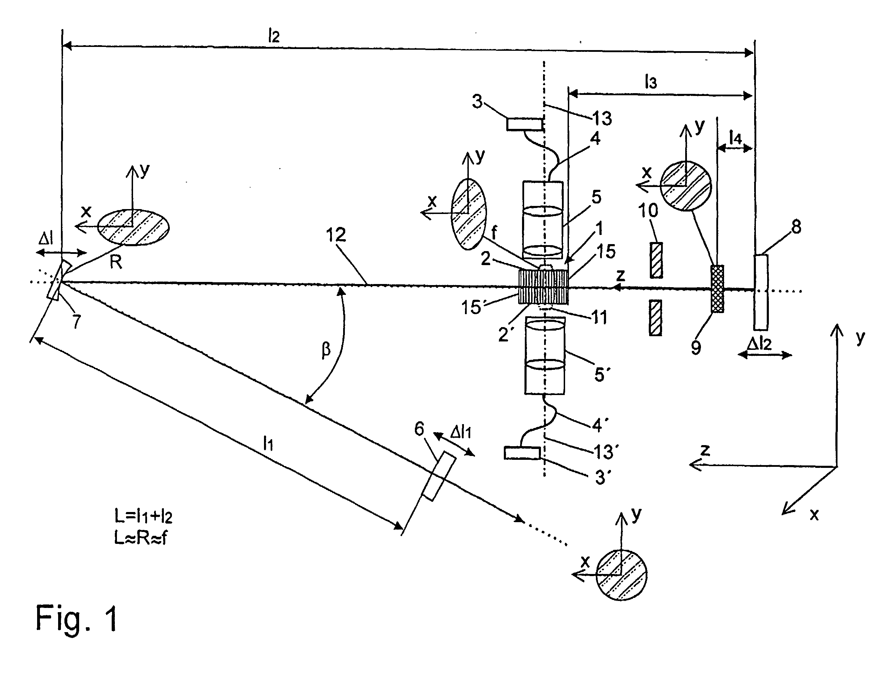

**Fig. 1** stellt den Aufbau einer Variante des modengekoppelten Festkörperlasers dar. Ein Lasermedium 1 wird von zwei Seitenflächen 2 und 2' her mit Laserdioden 3 und 3' gepumpt. Die Laserdioden 3 und 3' sind über Lichtleitfaserverbindungen 4 und 4' mit jeweils einer Pumpoptik 5 und 5' verbunden. Die Pumpoptik 5, 5' stellt einen Kondensor dar, der das Licht in jeweils einem Kegel in das Lasermedium 1 fokussiert. Die Leistungsdichte wird so eingestellt, daß optimale Bedingungen für den Laserbetrieb erreicht werden können, d. h. der optische Gesamtwirkungsgrad des Lasers soll mehr als 30% betragen. Als Lasermedium 1 kommen Kristalle z.B. aus Nd:YAG, $Nd:YVO_4$, Nd:YLF oder $YAlO_3$ in Frage. Die Pumpwellenlänge der Laserdioden wird entsprechend an die Absorption des Kristalls angepaßt.

Der Resonator des Lasers besteht aus einem Auskoppelspiegel 6, einem sphärischen Faltungsspiegel 7 mit einem Radius R und aus einem ebenen 99,9%-Resonatorspiegel 8. Diese Bauelemente bestimmen eine Resonatorlänge L, wobei sich diese aus einzelnen Abständen der Bauelemente voneinander ergibt: $L= I_1 + I_2$. Die Faltung des Resonators erfolgt in einer y-z-Ebene durch den Faltungsspiegel 7 im Winkel β. Der Resonatorspiegel 8 hat einen Abstand $I_3$ vom Lasermedium 1.

Zwischen dem Lasermedium 1 und dem Resonatorspiegel 8 ist in einem Abstand $I_4$ vom Resonatorspiegel 8 ein Sättigbarer Absorber 9 und zweckmäßigerweise zwischen diesem und dem Lasermedium eine Modenblende 10 angeordnet.

Der Sättigbare Absorber 9 ist in diesem Beispiel eine Einfach-Quantenschicht, die auf einem für die Laserwellenlänge transparenten Substrat aufgebracht ist. Die Grenzflächen des Sättigbaren Absorbers 9 zum Raum des Laserresonators sind mit je einer Antireflexbeschichtung versehen. Diese Beschichtung ist an das im Raum des Laserresonators eingefüllte Medium, z.B. Luft oder Stickstoff angepaßt.

Der Sättigbare Absorber 9 wird in dem Abstand $I_4$ so vor dem Resonatorspiegel 8 positioniert, daß eine saubere Modensynchronisation erfolgt. Dies ist zum Beispiel der Fall, wenn ein Intensitätsmaximum der Laserwellenlänge $\lambda_L$ in der Einfach-Quantenschicht liegt. Der Sättigbare Absorber 9 liegt dabei näher am Resonatorspiegel 8 als am Laserkristall 1.

Bedingt durch den sphärischen Faltungsspiegel 7 entsteht im Resonator ein Astigmatismus, der den Laserstrahl eine Elliptizität verleiht, deren Größe von dem Radius R und dem Faltungswinkel β abhängt *(Köcher, W.:*

*Solid-Stade Laser Engineering, Vol.1; Edition 4; Berlin, Springer Verlag 1996).*

Der Faltungswinkel β ist hier 15°. In Fig. 1 ist am Faltungsspiegel 7 schematisch die Form des durch den Faltungsspiegel erzeugten Strahlprofils in Bezug zur x-y-Ebene dargestellt.

Im Beispiel nach **Fig. 1** erfolgt ein Pumpen des Lasermediums 1 von der Seite, daß heißt im Winkel von 90 Grad zu einer optischen Achse 12 der Laserstrahlung. Dabei entsteht ein weiterer Astigmatismus im Strahlengang der Laserstrahlung, infolge der Ausbildung einer Thermischen Linse 11 mit einer mittleren Brennweite f, die sich über die Länge des Lasermediums 11 in Resonatorrichtung (z-Richtung) und senkrecht dazu (x-y-Ebene) ausdehnt. Im Beispiel nach Fig. 1 ist diese Thermische Linse 11 gestrichelt gezeichnet als optisches Bauelement angedeutet und mit einer mittleren Brechzahl f bestimmt. Die Verformung des Strahlprofiles der Laserstrahlung infolge der Thermischen Linse 11, hervorgerufen durch Brechzahlunterschiede in x-Richtung und in y-Richtung ist schematisch zur thermischen Linse 11 dargestellt.

Gemäß der Erfindung werden nun der Astigmatismus durch den Faltungsspiegels 7 und der Astigmatismus durch die Thermischen Linse 11 so miteinander kombiniert, daß auf dem Sättigbaren Absorber 9 ein kreisrundes Strahlprofil der Laserstrahlung in der x-y-Ebene entsteht. In diesem Beispiel ist es ausreichend, daß die Pumpstrahlung in der y-z-Ebene in das Lasermedium eindringt, was bei einem anisotropen Material wie zum Beispiel $Nd:YVO_4$ zu dem an dieser Stelle gezeigten elliptischen Strahlprofil führt.

Eine Anisotropie des Materials in x-Richtung und in y-Richtung kann gezielt genutzt werden, um die Elliptizität der Thermische Linse 11 zu verkleinern oder zu vergrößern. Im Beispiel ist die Länge des Resonators L etwa gleich dem Radius R des Faltungsspiegel 7 und diese entsprechen der mittleren Brennweite f der Thermischen Linse 11. Beispielsweise ist für eine Pulswiederholfrequenz von etwa 214 MHz die Länge L des Resonators 770 mm, der Radius des Faltungsspiegels R ist 700 mm und die mittlere Brennweite der Thermischen Linse f ist 700 mm. Die Längen werden folgendermaßen gewählt: $I_1$ = 250 mm, $I_2$ = 550 mm, $I_3$ = 100 mm und $I_4$ = 30 mm.

Ein weiterer wichtiger Aspekt der Erfindung ist, das die Größe des kreisrunden Strahlprofiles auf dem Sättigbaren Absorber 9 mit Hilfe des Faltungsspiegels 7 durch eine Abstandsänderung um ΔI in z-Richtung nun so eingestellt werden kann, daß einerseits eine erforderliche Leistungsdichte für die Funktion des Sättigbaren Absorbers 9 zum passiven Modenkoppeln erreicht wird, andererseits die Leistungsdichte sicher unterhalb der Zerstörschwelle des Sättigbaren Absorbers 9 liegt. Die mit der Abstandsänderung ΔI verbundenen Einstellung des Durchmessers des Sports auf dem Sättigbaren Absorber 9 erfolgt durch den Faltungsspiegels 7 unter Beibehaltung der gesamten Länge L des Laserresonators, indem auch der Auskoppelspiegel 6 und der Resonatorspiegel 8 verschiebbar angeordnet sind und ein entsprechender Längenausgleich um $\Delta I_1$. und $\Delta I_2$ einstellbar ist.

Der Einzelimpuls im modensynchronisierten Regime eines Laserresonators muß nämlich eine ausreichende Energie besitzen, um den passiven Sättigbaren Absorber innerhalb seiner Lebensdauer einmal zu sättigen.

Entsprechend der gewünschten Durchschnittsleistung für den Laser wird der Strahldurchmesser (aktiver Spot) auf dem Sättigbaren Absorber 9 so groß eingestellt, daß in Verbindung mit der Positionierung des Sättigbaren Absorbers 9 in z-Richtung, und damit in Bezug zur Intensitätsverteilung der stehenden Laserwellenlänge, die erforderliche Leistungsdichte erreicht wird. Im Beispiel beträgt der Strahldurchmesser 430 μm. Auf dem Sättigbaren Absorber beträgt die Abweichung des Spotes von der Rundheit weniger als 2 μm.

Wenn diese Einstellung des Laserresonators durchgeführt ist, folgt eine Feineinstellung des passiven Modenkoppelns im Laserresonator. Diese besteht darin, daß eine Variation der Ausbildung der thermischen Linse infolge einer gezielten Verteilung der Strahlungsleistung des Pumplichtes im Laserkristall vorgenommen wird. Im Beispiel nach Fig. 1 erfolgt die Einstellung der Energieverteilung durch die Verteilung der Einstrahlung des Pumplichtes am Umfang der Seitenflächen des Lasermediums 1 durch die Einstellung der Lichtleistung der Pumplichtquellen, hier der Laserdioden, und der Einstrahlrichtungen 13, 13' des Pumplichtes in das Lasermedium 1, abweichend zum 90°-Winkel bezogen zur z-Achse und/oder zur x-Achse. Damit sich die Änderung der Thermischen Linse auf die Leistungsverteilung im Spot auf dem Sättigbaren Absorber 9 wirkungsvoll auswirkt, ist dieser relativ dicht vor dem Resonatorspiegel 8 angeordnet. Um die Schwierigkeiten der Einhaltung einer genauen Justage zu umgehen, kann der Sättigbare Abssorber 9 auch direkt auf den Resonatorspiegel 8 aufgebracht werden, d.h. $I_4$ = 0.

Weiterhin ist im Laserresonator zwischen dem Lasermedium 1 und dem Sättigbaren Absorber 9 eine Modenblende 10 enthalten, um einen beugungsbegrenzten Strahl zu sichern. Der Resonator selbst wird so aufgebaut, daß vorrangig nur der Grundmode anschwingt. Am Auskoppelspiegel 6 steht ein Laserstahl mit einem mittleren Durchmesser von 300 μm zur Verfügung, mit eine Abweichung von +/- 8 μm von der Rundheit.

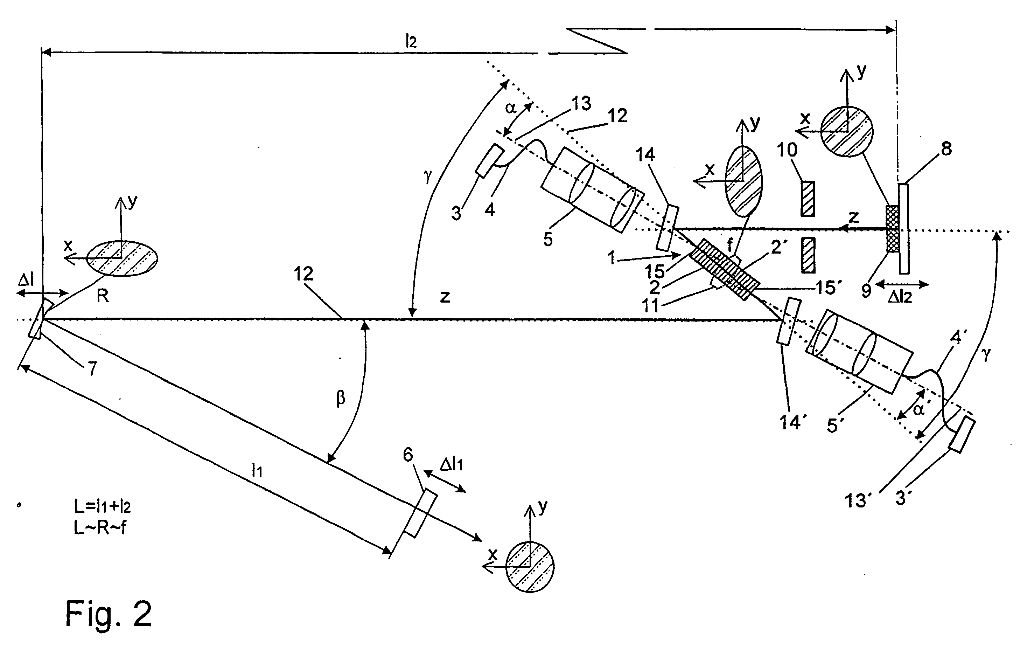

**Fig. 2** zeigt einen Laserresonator, dessen Lasermaterial 1 doppelseitig von den Endflächen 15, 15' her gepumpt wird. Gleiche Bezugszeichen bezeichnen die gleichen Bauteile wie in Fig. 1. Das Pumplicht wird aus den Pumpoptiken 5 und 5' über Einkoppelspiegel 14 und 14' endseitig in das Lasermedium fokussiert. Der Grad der Bündelung des Pumplichtes und die Schrägstellung seiner Einstrahlrichtung um den Winkel α zur optischen Achse 12 wirkt sich auf die Ausbildung des Profils der Thermischen Linse 11 innerhalb des Lasermediums 1 aus.

Der Kegel der Pumpstrahlung wird nicht, wie im Stand der Technik, genau entlang der optischen Achse des Resonators eingestrahlt, sondern unter den kleinen Winkeln $\alpha$, $\alpha'$, zur optischen Achse 12. Der gemeinsame Pumpspot im Lasermedium 1 trägt dann gezielten elliptischen Charakter. Damit kann der Astigmatismus des Resonators infolge des Faltungsspiegels 7 wie zu Fig. 1 beschrieben minimiert oder kompensiert und die Intensitätsverteilung auf dem Sättigbaren Absorber 9 optimiert werden. Weiterhin kann die Pumpoptik 5, 5' mit einer astigmatischen Optik ausgestattet werden, um die Form der Thermische Linse entsprechend zu beeinflussen. Weiterhin bietet diese Anordnung den Vorteil, daß das Lasermedium an allen, den vier Seitenoberflächen, gekühlt werden kann und damit eine optimale Wärmeabfuhr zu gewährleisten.

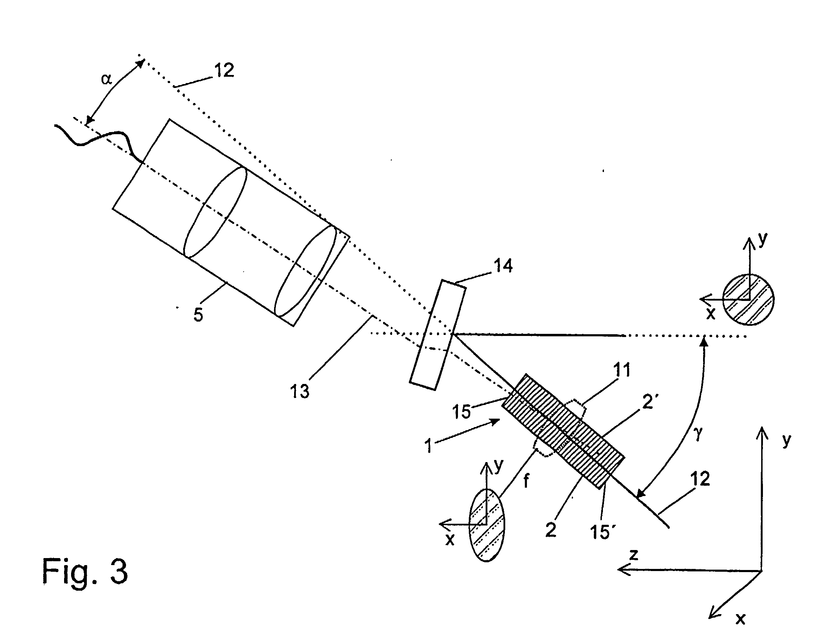

**Fig. 3** zeigt die vergrößerte Darstellung eines einseitig endgepumpten Lasermediums 1. Die Bezugszeichen in Fig. 3 bezeichnen gleiche Bauteile wie in den Figuren 1 und 2. Der dargestellte Einkoppelspiegel 14 wirkt für die Pumpstrahlung als planparallele Platte und erzeugt einen Parallelversatz der optischen Achse 13 der Pumpstrahlung. In Fig. 3 ist diese optische Achse 13 um den Winkel $\alpha$ zur optische Achse 12 der Laserstrahlung in der y-z-Ebene geneigt dargestellt. Diese Schrägstellung kann aber auch nur oder zusätzlich, in der x-z-Ebene erfolgen.

Ziel dieser Schrägstellung ist ein Feinabgleich der Strahleigenschaften der Laserstrahlung, die in den Sättigbaren Absorber einfällt, mit dem Ergebnis, daß eine saubere Modensynchronisation durchgeführt wird, die Einzelimpulsen möglichst konstanter Amplitude, Pulsdauer und Wiederholrate liefert.

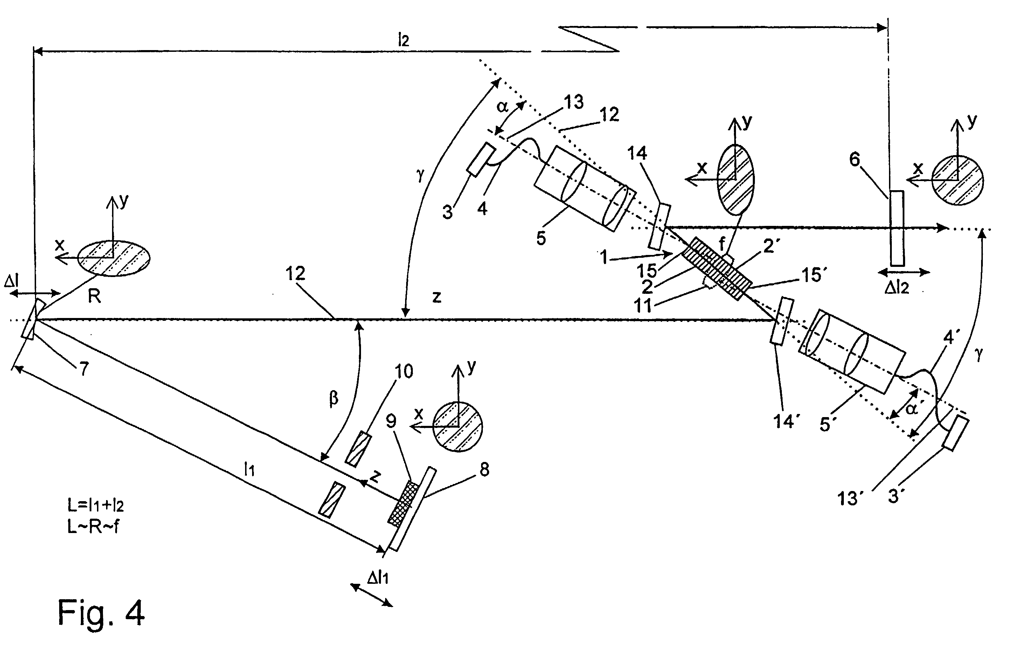

**Fig. 4** zeigt ein Resonatordesign, dessen Aufbau in Anlehnung zu dem in Fig. 3 beschriebenen erfolgte. Jedoch sind hier die Einbaulage von Auskoppelspiegel 6 und Resonatorspiegel 8 mit dem Sättigbaren Absorber 9 und der Modenblende 10 gegenseitig vertauscht. Auch mit dieser Anordnung läßt sich durch die Abstandänderungen $\Delta l$, $\Delta l_1$ .und/oder $\Delta l_2$, unter Einhalltung der Resonatorlänge L, die Spotgröße auf dem Sättigbaren Absorber einstellen.

**Patentansprüche**

1. Modensynchronisierter Festkörperlaser mit einem Lasermedium (1) innerhalb eines durch einen Resonatorspiegel (8) und einen Auskoppelspiegel (6) gebildeten Laserresonators, der durch mindestens einen konkaven Faltungsspiegel (7) gefaltet ist, mit einem sättigbaren Absorber (9) innerhalb des Laserresonators und mit mindestens einer Laserpumpquelle (3, 4, 5, 3', 4', 5'), deren Pumpstrahlung das Lasermedium (1) pumpt, wobei die gestreckte Resonatorlänge L eine Funktion der Puls-Wiederholfrequenz ist und diese durch einen Abstand zwischen dem Resonatorspiegel (8) und dem Auskoppelspiegel (6) bestimmt ist, **dadurch gekennzeichnet, daß**

   - ein elliptisches Strahlprofil innerhalb des Laserresonators, welches durch eine Schrägstellung einer optischen Achse des mindestens einen konkaven Faltungsspiegels (7) zu einer gefalteten optischen Achse (12) des Laserresonators bedingt ist, mit einer elliptischen thermischen Linse (11 ) im Lasermedium (1) beseitigt wird, deren optische Wirkung eine Elliptizität des Strahlprofiles erzeugt, das um 90° zu dem durch den Faltungsspiegel (7) erzeugten elliptischen Strahlprofil versetzt ist, wobei der Grad der Elliptizität der thermischen Linse (11) durch die Materialeigenschaften, die kristallographische Orientierung und die geometrischen Abmessungen des Lasermediums (1) und durch eine Wahl der Intensität und Intensitätsverteilung der Pumpstrahlung im Lasermedium (1) so eingestellt wird, daß eine möglichst gleichmäßige Energiedichteverteilung über das bestrahlte Gebiet des sättigbaren Absorbers (9) entsteht.

2. Modensynchronisierter Festkörperlaser nach Anspruch 1, **dadurch gekennzeichnet, daß** der Krümmungsradius R des Faltungsspiegels (7) einen Wert im Bereich des 0,5-fachen bis 2-fachen der mittleren Brennweite f der thermischen Linse (11)aufweist, wobei insbesondere R = f ist.

3. Modensynchronisierter Festkörperlaser nach Anspruch 1 oder Anspruch 2, **dadurch gekennzeichnet, daß** der eine konkave Faltungsspiegel (7) einen Krümmungsradius R hat, der im Bereich zwischen U2 und 2*L liegt, insbesondere der Krümmungsradius R näherungsweise gleich der Laserresonatorlänge L ist, dieser Faltungsspiegel (7) innerhalb der gestreckten Resonatorlänge L angeordnet ist und einen ersten Resonatorast mit der Länge $l_1$ und einen zweiten Resonatorast mit der Länge $l_2$ bildet und in diesem das Lasermedium (1) mit der thermischen Linse (11) angeordnet ist, wobei die Abstände durch $l_1 + l_2 = L$ und $l_2 > l_1$ bestimmt sind, insbesondere $l_2$ zweimal bis dreimal so groß wie $l_1$ ist.

4. Modensynchronisierter Festkörperlaser nach Anspruch 3, **dadurch gekennzeichnet, daß** der Abstand zwischen dem Faltungsspiegel (7) und dem Resonatorspiegel (8) einstellbar ist, wobei damit die Größe des bestrahlten Gebietes auf dem sättigbaren Absorber (9) in Abhängigkeit von der auf diesen einfallenden Strahlungsleistung so einstellbar ist, daß eine Energiedichte erreicht wird, um den sättigbaren Absorber (9) innerhalb seiner Ladungsträger-Lebensdauer einmalig zu sättigen, wobei die gestreckte Resonatorlänge L durch eine weitere Längenänderung zwischen dem Faltungsspiegel (7) und dem Auskoppelspiegel (6) beibehalten wird.

5.  Modensynchronisierter Festkörperlaser nach Anspruch 4, **dadurch gekennzeichnet, daß** das bestrahlte Gebiet auf dem sättigbaren Absorber (9) größer 200 µm im Durchmesser ist.

6.  Modensynchronisierter Festkörperlaser nach einem oder mehreren der Ansprüche von 1 bis 5, **dadurch gekennzeichnet, daß** der Faltungsspiegel (7) einen Faltungswinkel (β) einer optischen Achse (12) des Resonators zwischen 5° und 45° in einer Faltungsebene einstellt.

7.  Modensynchronisierter Festkörperlaser nach einem oder mehreren der Ansprüche von 1 bis 6, **dadurch gekennzeichnet, daß** der sättigbare Absorber (9) in einem Abstand $l_4$ zum Resonatorspiegel (8) steht, der kleiner $l_1/10$ ist.

8.  Modensynchronisierter Festkörperlaser nach Anspruch 7, **dadurch gekennzeichnet, daß** der sättigbare Absorber (9) auf dem Resonatorspiegel (8) aufgebracht ist.

9.  Modensynchronisierter Festkörperlaser nach Anspruch 7 oder Anspruch 8, **dadurch gekennzeichnet, daß** der sättigbare Absorber (9) aus einer Einfach-Quanten-Schicht besteht.

10. Modensynchronisierter Festkörperlaser nach Anspruch 7, 8 oder 9, **dadurch gekennzeichnet, daß** die mindestens eine an das freie Volumen angrenzende optische Fläche des sättigbaren Absorbers (9) mit einer Anti-Reflex-Beschichtung versehen ist.

11. Modensynchronisierter Festkörperlaser nach Anspruch 1, **dadurch gekennzeichnet, daß** die Laserpumpquelle aus einer oder mehrerer Laserdioden (3, 3') besteht, die über eine Koppeloptik (5, 5') mit dem Lasermedium (1) optisch verbunden ist/ sind.

12. Modensynchronisierter Festkörperlaser nach Anspruch 11, **dadurch gekennzeichnet, daß** zwischen der oder den Laserdiode(n) (3, 3') und jeder Koppeloptik (5, 5') eine Lichtleitfaserverbindung (4, 4') vorgesehen ist.

13. Modensynchronisierter Festkörperlaser nach Anspruch 1 oder 6 oder 7, **dadurch gekennzeichnet, daß** der Resonatorspiegel (8) ein Metallspiegel oder ein dielektrischer Spiegel, insbesondere ein Bragg-Reflektor ist.

14. Modensynchronisierter Festkörperlaser nach Anspruch 1, **dadurch gekennzeichnet, daß** die Flächennormale jeder der Endflächen (15, 15') des Lasermediums (1) unter einem Winkel zwischen 0° und 5° zur optischen Achse des Laserresonators steht.

15. Modensynchronisierter Festkörperlaser nach Anspruch 1, **dadurch gekennzeichnet, daß** der Laserresonator durch einen oder zwei Einkoppelspiegel (14, 14') zusätzlich einmalig oder zweimalig gefaltet ist und die eine oder zwei Laserpumpquelle (n) mit ihrer(en) Pumpstrahlung(en) über den(die) Einkoppelspiegel (14, 14') das Lasermedium (1) endseitig pumpt(en).

16. Modensynchronisierter Festkörperlaser nach Anspruch 15, **dadurch gekennzeichnet, daß** der sättigbare Absorber (9) außerhalb des von der Endfläche (15) des Lasermediums (1) und dem Einkoppelspiegel (14) begrenzten Strahlenganges liegt.

17. Modensynchronisierter Festkörperlaser nach Anspruch 1, **dadurch gekennzeichnet, daß** das Lasermedium (1) von der Seite gepumpt wird, wobei durch eine verteilte Anordnung der Strahlung mehrerer Laserpumpquellen die elliptische thermische Linse (11) einstellbar ist.

18. Modensynchronisierter Festkörperlaser nach Anspruch 15 oder Anspruch 17, **dadurch gekennzeichnet, daß** eine Schrägstellung einer optischen Achse (13, 13') der Pumpstrahlung(en) zu einer optischen Achse (12) des Laserresonators im rechten Winkel zu dieser oder mit einem Winkel α zwischen größer 0° bis kleiner 5° vorgesehen ist.

19. Modensynchronisierter Festkörperlaser nach einem oder mehreren der Ansprüche von 1 bis 18, **dadurch gekennzeichnet, daß** eine Modenblende (10) im Strahlengang zwischen einer Endfläche (15) des Lasermediums und dem sättigbaren Absorber angeordnet ist.

20. Modensynchronisierten Festkörperlaser nach Anspruch 3, **dadurch gekennzeichnet, daß** in dem ersten Resonatorast nur der Auskoppelspiegel (6) steht und in dem zweiten Resonatorast ausgehend von dem Faltungsspiegel (7) das Lasermedium (1) mit der thermischen Linse (11), der sättigbare Absorber (9) und der Resonatorspiegel (8) aufeinanderfolgend angeordnet sind.

21. Modensynchronisierten Festkörperlaser nach Anspruch 3, **dadurch gekennzeichnet, daß** in dem ersten Resonatorast ausgehend von dem Faltungsspiegel (7) der sättigbare Absorber (9) und der Resonatorspiegel (8) aufeinanderfolgend angeordnet sind und in dem zweiten Resonatorast ausgehend von dem Faltungsspiegel (7) das Lasermedium (1) mit der thermischen Linse (11) und der Auskoppelspiegel (6) angeordnet sind.

## Claims

1. A mode-synchronized solid-state laser comprising a laser medium (1) being provided inside a laser resonator formed by a resonator mirror (8) and an output coupling mirror (6), said laser resonator being folded by at least one concave folding mirror (7); with a saturable absorber (9) being provided inside said laser resonator and at least one laser pump source (3, 4, 5, 3', 4', 5') being provided whose pump beam pumps the laser medium (1); wherein the elongated resonator length L is a function of the pulse repetition frequency, the latter being determined by a distance between the resonator mirror (8) and the output coupling mirror (6), **characterized in that** an elliptic beam profile inside the laser resonator which is caused by an inclination of an optical axis (12) of the at least one concave folding mirror (7) relative to a folded optical axis (12) of the laser resonator is eliminated by an elliptic thermal lens (11) in the laser medium (1), optical action of said elliptic thermal lens (11) generating an ellipticity of the beam profile which is offset by 90° relative to the elliptic beam profile generated by the folding mirror (7), wherein, by virtue of the material characteristics, the crystallographic orientation and the geometric dimensioning of the laser medium (1) and by a choice of intensity and intensity distribution of the pump beam in the laser medium (1), the degree of ellipticity of the thermal lens (11) is adjusted in such a way that an energy density distribution which is as uniform as possible occurs over the irradiated zone of the saturable absorber (9).

2. The mode-synchronized solid-state laser according to claim 1, **characterized in that** the radius of curvature R of the folding mirror (7) is in the range of 0.5-times to 2-times the average focal length f of the thermal lens (11), in particular, R = f.

3. The mode-synchronized solid-state laser according to claim 1 or claim 2, **characterized in that** the one concave folding mirror (7) has a radius of curvature R between L/2 and 2*L, in particular, the radius of curvature R being approximately equal to the laser resonator length L, said folding mirror (7) being arranged within the elongated resonator length L and forming a first resonator branch with length $l_1$ and a second resonator branch with length $l_2$ and the laser medium (1) being arranged therein with the thermal lens (11), wherein the distances are determined by $l_1 + l_2 = L$ and $l_2 > l_1$, in particular $l_2$ is two to three times greater than $l_1$.

4. The mode-synchronized solid-state laser according to claim 3, **characterized in that** the distance between the folding mirror (7) and the resonator mirror (8) can be adjusted such that the size of the irradiated zone on the saturable absorber (9) is adjustable in such a way, depending on the radiation output incident on the latter, that an energy density is achieved in order to saturate the saturable absorber (9) once within its charge carrier lifetime, wherein the elongated resonator length L is retained by a further change in length between the folding mirror (7) and the output coupling mirror (6).

5. The mode-synchronized solid-state laser according to claim 4, **characterized in that** the irradiated zone on the saturable absorber (9) is greater than 200 µm in diameter.

6. The mode-synchronized solid-state laser according to one or several of claims 1 to 5, **characterized in that** the folding mirror (7) adjusts a fold angle (β) of an optical axis (12) of the resonator between 5° and 45° in a fold plane.

7. The mode-synchronized solid-state laser according to one or several of claims 1 to 6, **characterized in that** the saturable absorber (9) is arranged at a distance $l_4$ from the resonator mirror (8) which is less than $l_1/10$.

8. The mode-synchronized solid-state laser according to claim 7, **characterized in that** the saturable absorber (9) is arranged on the resonator mirror (8).

9. The mode-synchronized solid-state laser according to claim 7 or claim 8, **characterized in that** the saturable absorber (9) comprises a single quantum layer.

10. The mode-synchronized solid-state laser according to claim 7, 8 or 9, **characterized in that** the at least one optical surface of the saturable absorber (9) adjoining the free volume is provided with an antireflection coating.

11. The mode-synchronized solid-state laser according to claim 1, **characterized in that** the laser pump source is formed of one or several laser diodes (3, 3') which is/are optically connected with the laser medium (1) via coupling optics (5, 5').

12. The mode-synchronized solid-state laser according to claim 11, **characterized in that** an optical fiber connection (4, 4') is provided between the laser diode(s) (3, 3') and each coupling optics (5, 5').

**13.** The mode-synchronized solid-state laser according to claim 1 or 6 or 7, **characterized in that** the resonator mirror (8) is a metal mirror or a dielectric mirror, in particular a Bragg reflector.

**14.** The mode-synchronized solid-state laser according to claim 1, **characterized in that** the surface normal of each end face (15, 15') of the laser medium (1) extends at an angle of between 0° and 5° relative to the optical axis of the laser resonator.

**15.** The mode-synchronized solid-state laser according to claim 1, **characterized in that** the laser resonator is additionally folded once or twice by one or two input coupling mirrors (14, 14'), and the one laser pump source or two laser pump sources pump(s) the laser medium (1) at the ends with its (their) pump beam(s) via the input coupling mirror(s) (14, 14').

**16.** The mode-synchronized solid-state laser according to claim 15, **characterized in that** the saturable absorber (9) lies outside of the beam path delimited by the end face (15) of the laser medium (1) and the input coupling mirror (14).

**17.** The mode-synchronized solid-state laser according to claim 1, **characterized in that** the laser medium (1) is pumped from the side, wherein the elliptic thermal lens (11) is adjustable by means of a distributed arrangement of the radiation of a plurality of laser pump sources.

**18.** The mode-synchronized solid-state laser according to claim 15 or claim 17, **characterized in that** an inclination of an optical axis (13,13') of the pump beam(s) is provided relative to an optical axis (12) of the laser resonator at a right angle to the latter or at an angle α in a range from greater than 0° to less than 5°.

**19.** The mode-synchronized solid-state laser according to one or several of claims 1 to 18, **characterized in that** a mode diaphragm (10) is arranged in the beam path between an end face (15) of the laser medium (1) and the saturable absorber.

**20.** The mode-synchronized solid-state laser according to claim 3, **characterized in that** only the output coupling mirror (6) is in the first resonator branch and the laser medium (1) with the thermal lens (11), the saturable absorber (9) and the resonator mirror (8) are arranged successively in the second resonator branch proceeding from the folding mirror (7).

**21.** The mode-synchronized solid-state laser according to claim 3, **characterized in that** the saturable absorber (9) and the resonator mirror (8) are arranged in the first resonator branch successively proceeding from the folding mirror (7), and the laser medium (1) with the thermal lens (11) and the output coupling mirror (6) are arranged in the second resonator branch proceeding from the folding mirror (7).

**Revendications**

**1.** Laser solide à synchronisation modale avec un milieu laser (1) à l'intérieur d'un résonateur laser formé par un miroir de résonateur (8) et un miroir de découplage (6), qui est plié par au moins un miroir de repli (7) concave, avec un absorbeur (9) pouvant être saturé à l'intérieur du résonateur laser et avec au moins une source de pompage laser (3, 4, 5, 3', 4', 5') dont le rayonnement de pompage pompe le milieu laser (1), la longueur (L) du résonateur tendu étant une fonction de la fréquence de répétition des impulsions et celle-ci étant déterminée par une distance entre le miroir de résonateur (8) et le miroir de découplage (6), **caractérisé en ce que**

- un profil elliptique de rayonnement à l'intérieur du résonateur laser, qui est dû à une position oblique d'un axe optique du ou des miroirs de repli (7) concaves par rapport à un axe optique (12) replié du résonateur laser, est éliminé au moyen d'une lentille thermique (11) elliptique dans le milieu laser (1), lentille dont l'effet optique produit une ellipticité du profil de rayonnement qui est décalé de 90° par rapport au profil elliptique de rayonnement produit par le miroir de repli (7), le degré de l'ellipticité de la lentille thermique (11) étant réglé par les propriétés du matériau, l'orientation cristallographique et les dimensions géométriques du milieu laser (1) et par le choix de l'intensité et de la distribution de l'intensité du rayonnement de pompage dans le milieu laser (1), de manière à obtenir une distribution aussi uniforme que possible de l'énergie sur la région irradiée de l'absorbeur (9) pouvant être saturé.

**2.** Laser solide à synchronisation modale selon la revendication 1, **caractérisé en ce que** le rayon de courbure R du miroir de repli (7) présente une valeur comprise entre 0,5 fois et 0,2 fois la distance focale moyenne f de la lentille thermique (11), R étant en particulier égal à f.

**3.** Laser solide à synchronisation modale selon la revendication 1 ou la revendication 2, **caractérisé en ce qu'**un miroir de repli (7) présente un rayon de courbure R qui se situe entre L/2) et 2*L, en particulier le rayon de courbure R est approximativement égal à la longueur R du résonateur laser, ce miroir de repli (7) est disposé à l'intérieur de la longueur L tendue du résonateur, et forme un premier module de résonateur de longueur $l_1$ et un deuxième module de résonateur de longueur $l_2$, et dans celui-ci est disposé le milieu laser (1) avec la lentille thermique (11), les distances étant déterminées par $l_1 + l_2 = L$ et $l_2 > l_1$, en particulier $l_2$ est de deux à trois fois plus grand que $l_1$.

4. Laser solide à synchronisation modale selon la revendication 3, **caractérisé en ce que** la distance entre le miroir de repli (7) et le miroir de résonateur (8) est réglable, la dimension de la région irradiée sur l'absorbeur (9) pouvant être saturée étant réglable en fonction de la puissance de rayonnement parvenant sur celui-ci, de manière à obtenir une densité d'énergie pour saturer une fois l'absorbeur (9) pouvant être saturé à l'intérieur de sa durée de vie du support de charge, la longueur L du résonateur tendu étant conservée par une modification complémentaire de la longueur entre le miroir de repli (7) et le miroir de découplage (6).

5. Laser solide à synchronisation modale selon la revendication 4, **caractérisé en ce que** la région irradiée sur l'absorbeur (9) pouvant être saturé présente un diamètre supérieur à 200 $\mu$m.

6. Laser solide à synchronisation modale selon une ou plusieurs des revendications 1 à 5, **caractérisé en ce que** le miroir de repli (7) règle un angle de pliage ($\beta$) d'un axe optique (12) du résonateur entre 5° et 45° dans un plan de pliage.

7. Laser solide à synchronisation modale selon une ou plusieurs des revendications 1 à 6, **caractérisé en ce que** l'absorbeur (9) pouvant être saturé se trouve à une distance $l_4$ du miroir de résonateur (8), laquelle est inférieure à $l_1/10$.

8. Laser solide à synchronisation modale selon la revendication 7, **caractérisé en ce que** l'absorbeur (9) pouvant être saturé est placé sur le miroir de résonateur (8).

9. Laser solide à synchronisation modale selon la revendication 7 ou la revendication 8, **caractérisé en ce que** l'absorbeur (9) pouvant être saturé est constitué d'une couche quantique simple.

10. Laser solide à synchronisation modale selon la revendication 7, 8 ou 9, **caractérisé en ce qu'**au moins une surface optique adjacente au volume libre de l'absorbeur (9) pouvant être saturé est pourvu d'un revêtement anti-reflet.

11. Laser solide à synchronisation modale selon la revendication 1, **caractérisé en ce que** la source de pompage laser est constituée d'une ou de plusieurs diodes laser (3, 3') qui est/sont reliée(s) optiquement au milieu laser (1) par une optique de couplage (5, 5').

12. Laser solide à synchronisation modale selon la revendication 11, **caractérisé en ce qu'**une liaison à fibres optiques (4, 4') est prévue entre la ou les diodes laser (3, 3') et chaque optique de couplage (5, 5').

13. Laser solide à synchronisation modale selon la revendication 1 ou 6, ou 7, **caractérisé en ce que** le miroir de résonateur (8) est un miroir métallique ou un miroir diélectrique, en particulier un réflecteur de Bragg.

14. Laser solide à synchronisation modale selon la revendication 1, **caractérisé en ce que** la normale à chacune des surfaces d'extrémité (15, 15') du milieu laser (1) forme un angle compris entre 0° et 5° par rapport à l'axe optique du résonateur laser.

15. Laser solide à synchronisation modale selon la revendication 1, **caractérisé en ce que** le résonateur laser est plié en outre une fois ou deux fois par un ou deux miroir(s) d'entrée (14, 14') et une ou deux source(s) de pompage laser pompe(nt) côté extrémité, avec leur(s) rayonnement(s) de pompage, le milieu laser (1), par le(s) miroir(s) d'entrée (14, 14').

16. Laser solide à synchronisation modale selon la revendication 15, **caractérisé en ce que** l'absorbeur (9) pouvant être saturé se situe à l'extérieur du parcours des rayons limité par la surface d'extrémité (15) du milieu laser (1) et par le miroir d'entrée ( 14) .

17. Laser solide à synchronisation modale selon la revendication 1, **caractérisé en ce que** le milieu laser ( 1) est pompé depuis le côté, une disposition répartie du rayonnement de plusieurs sources de pompage laser permettant de régler la lentille thermique ( 11 ) elliptique.

18. Laser solide à synchronisation modale selon la revendication 15 ou la revendication 17, **caractérisé en ce qu'**il est prévu une position oblique d'un axe optique (13, 13') du(des) rayonnement(s) de pompage par rapport à un axe optique (12) du résonateur laser à angle droit par rapport à celui-ci ou suivant un angle $\alpha$ compris entre plus de 0° et moins de 5°.

19. Laser solide à synchronisation modale selon une ou plusieurs des revendications 1 à 18, **caractérisé en ce qu'**un diaphragme de mode (10) est disposé dans le parcours des rayons entre une surface d'extrémité (15) du milieu laser et l'absorbeur pouvant être saturé.

**20.** Laser solide à synchronisation modale selon la revendication 3, **caractérisé en ce que** dans le premier module de résonateur se trouve seulement le miroir de découplage (6) et dans le deuxième module de résonateur, partant du miroir de repli (7), sont disposés successivement le milieu laser (1) avec la lentille thermique (11), l'absorbeur (9) pouvant être saturé et le miroir de résonateur (8).

**21.** Laser solide à synchronisation modale selon la revendication 3, **caractérisé en ce que** dans le premier module de résonateur, partant du miroir de repli (7), sont disposés successivement l'absorbeur (9) pouvant être saturé et le miroir de résonateur (8) et dans le deuxième module de résonateur, partant du miroir de repli (7), sont disposés le milieu laser (1) avec la lentille thermique ( 11 ) et le miroir de découplage (6).

Fig. 1

$L=l_1+l_2$
$L\approx R\approx f$

EP 1 071 178 B1

Fig. 2

$L = l_1 + l_2$
$L \sim R \sim f$

Fig. 3

Fig. 4

$L = l_1 + l_2$
$L \sim R \sim f$